# EUROPEAN PATENT SPECIFICATION

(11) **EP 2 987 955 B1**
(45) Date of publication and mention of the grant of the patent: **22.05.2019**
(21) Application number: 15181429.0
(22) Date of filing: 24.02.2011
(51) Int. Cl.: F01D 5/18, F01D 5/22

(54) **GAS TURBINE BLADE, MANUFACTURING METHOD THEREFORE, AND GAS TURBINE USING TURBINE BLADE**
GASTURBINENSCHAUFEL, HERSTELLUNGSVERFAHREN DAFÜR UND GASTURBINENANLAGE MIT TURBINENSCHAUFEL
AUBE DE TURBINE À GAZ, SON PROCÉDÉ DE FABRICATION ET TURBINE À GAZ AYANT UNE AUBE DE TURBINE

(30) Priority: 03.03.2010 JP 2010046687; 01.12.2010 WO PCT/JP2010/071506
(43) Date of publication of application: 24.02.2016
(62) Divisional of application: 11750550.3
(73) Proprietor: Mitsubishi Hitachi Power Systems, Ltd., Yokohama 220-8401 (JP)
(72) Inventor: Hada, Satoshi, Tokyo, 108-8215 (JP); Imada, Takahiko, Tokyo, 108-8215 (JP); Shintani, Tomofumi, Tokyo, 108-8215 (JP); Ooe, Katsutoshi, Tokyo, 108-8215 (JP); Hirata, Norifumi, Tokyo, 108-8215 (JP); Asano, Hiroshi, Tokyo, 108-8215 (JP)
(74) Representative: Henkel, Breuer & Partner

(56) References cited:
- EP-A1- 2 037 081
- WO-A1-2004/057157
- JP-A- H07 119 405
- US-A- 2 972 807

## Description

### {Technical Field}

The present invention relates to gas turbine blades used in thermal power generation and so forth and relates, more specifically, to gas turbine blades in which cooling channels formed inside the turbine blades are improved, to a manufacturing method therefor, and to a gas turbine using the turbine blades.

### {Background Art}

In a gas turbine, because high-temperature working fluid flows in the area surrounding turbine blades, in general, cooling channels are formed inside the turbine blades in the longitudinal direction of the turbine blades, and cooling of the turbine blades is performed by streaming cooling air through the cooling channels. Part of the air compressed by a turbine compressor is extracted and fed into the cooling channels as the cooling air, and this cooling air flows through the cooling channels to cool the turbine blades from inside, thereby protecting the turbine blades from the heat of the high-temperature working fluid (combustion gas). Known conventional gas turbines (gas turbine blades) employing such a configuration include technology disclosed in Patent Literature 1.

In the conventional gas turbine disclosed in JP 2007-211618 A, a single-space hollow portion is formed from a base side of a turbine blade toward a tip side thereof, whereas a plurality of straight-channel-like elongated holes are formed from the tip side of the turbine blade toward the base side thereof; and these elongated holes communicate with the hollow portion at a mid portion of the turbine blade in the longitudinal direction. In addition, the hollow portion is widened at the portion communicating with the elongated holes. Accordingly, when forming the elongated holes from the tip side of the turbine blade by machining, the elongated holes are readily made to communicate with the hollow portion, and machining thereof is easy.

EP 2037081 A1 discloses a gas turbine blade with a number of cooling passageways extending from the base side of the blade to the tip side of the blade. The cooling passageways have expanded or swollen portions in a shank part below a platform of the blade. The expansion of the cooling passageways at this location is made for the purpose of facilitating the connection of additional platform cooling communication holes but not to facilitate the connection between tip-side cooling passage ways and base-side cooling passage ways.

US 2972807 A is directed to a process for producing smaller holes in an extruded billet which is difficult to put accurately into a chuck for the drilling of the holes. The document teaches a process where a billet part intended to form the blade portion is provided with larger longitudinal filled holes and smaller holes drilled through the base-side to meet the larger holes. Subsequently, the billet and especially the upper part forming the blade portion is longitudinally extruded such that the larger longitudinal filled holes are axially extended and thinned. A short part of the initially larger holes remains at the same vertical level in the transition portion from the unextruded root portion to the blade portion.

JP H07-119405 A discloses a turbine blade which has, in a platform portion, a pair of first manifolds for supplying coolant from a coolant supplying channel to a coolant communicating channel and a single second manifold for collecting the coolant from the coolant communicating channel to a coolant discharging channel. Although the pair of first manifolds and the single second manifold are set at different heights, all manifolds are respectively used as a header which supplies the coolant from a single cooling channel to a plurality of cooling communicating channels in the blade.

### {Summary of Invention}

### {Technical Problem}

However, with the structure in JP 2007-211618 A, because the hollow portion is formed as a single space, the effective cross-sectional area of the turbine blade ends up being reduced at this portion, thus causing a loss of turbine blade strength and rigidity; in the worst case, breakage (creep rupture, etc.) may be caused, and there has been a lack of reliability. On the other hand, if no hollow portion is provided but a plurality of straight-channel-like forms are formed by applying elongated-hole machining from both sides of the tip side and the base side of the turbine blade and connecting the channel-like forms at a mid portion so as to form one elongated hole, the effective cross-sectional area of the turbine blade can be increased for the space made by providing no hollow portion. However, in this method, it is difficult to align centers of the channel-like forms at the time of elongated-hole machining from two opposite directions, which may increase the machining costs or decrease the production yield due to incomplete penetration of the elongated holes with each other.

The present invention has been conceived in light of the above-described circumstances, and an object thereof is to provide gas turbine blades that are capable of simplifying the formation of cooling channels provided inside the turbine blades while simultaneously being capable of avoiding a loss of turbine blade strength and rigidity due to the formation of the cooling channels, thus being highly reliable, as well as to provide a manufacturing method therefor and a gas turbine employing the turbine blades.

### {Solution to Problem}

In order to solve the above-described problems, the present invention provides a gas turbine blade as defined by claim 1 and a method of manufacturing such a gas turbine blade as defined by claim 5.

Specifically, gas turbine blades according to the present invention are gas turbine blades in which cooling channels are formed inside the turbine blades, and the turbine blades are cooled by causing cooling air to circulate through the cooling channels, wherein the cooling channels include a plurality of straight channel-like base-side elongated holes that extend in a longitudinal direction at a base side of the turbine blade, a plurality of straight channel-like tip-side elongated holes that extend in a longitudinal direction at a tip side of the turbine blade, and a plurality of communicating hollow portions that are interposed at connection portions between the base-side elongated holes and the tip-side elongated holes to individually allow the two types of elongated holes to communicate with each other and that have larger cross-sectional areas than the channel cross-sectional areas of the two types of elongated holes.

According to the present invention, for example, when forming the tip-side elongated holes from the tip side of the turbine blades after forming the base-side elongated holes and the communicating hollow portions, because cross-sectional areas of the communicating hollow portions are larger than channel cross-sectional areas of the base-side elongated holes and the tip-side elongated holes, the tip-side elongated holes can easily penetrate the communicating hollow portions. Accordingly, it is possible to simplify the formation of the cooling channels formed inside the turbine blades. In addition, because the base-side elongated holes are formed in the plurality of straight-channel-like forms instead of a single hollow portion, it is possible to avoid the loss of turbine blade strength and rigidity caused by the formation of the cooling channels.

In addition, in gas turbine blades according to the present invention, the communicating hollow portions are formed so as to match the position of the platform portion of the turbine blade. Accordingly, the communicating hollow portions having the largest lateral cross-sectional areas among the cooling channels are formed inside the platform portions where the plate thickness is the largest in the turbine blades; therefore, portions where the effective cross-sectional areas of the turbine blades become small in practice are minimized, and thus, it is possible to prevent the loss of turbine blade strength and rigidity.

Furthermore, in gas turbine blades according to the present invention, among the plurality of the communicating hollow portions, the communicating hollow portions that are adjacent to each other are set at different heights. Accordingly, the communicating hollow portions adjacent to each other are prevented from being arranged at the same height, thereby increasing the distance between the individual communicating hollow portions; therefore, the effective cross-sectional areas of the turbine blades are prevented from being reduced at the positions of the communicating hollow portions, thereby making it possible to prevent the loss of turbine blade strength and rigidity.

Preferably, in gas turbine blades of the present invention, at least lengths from tip ends of the plurality of the tip-side elongated holes to the communicating hollow portions are set to be the same. Accordingly, simultaneous machining with a plurality of electrodes or drills is possible, variance in the accuracy of machining of the elongated holes does not occur, and the accuracy of machining is much improved.

Additionally, a gas turbine according to the present invention employs the gas turbine blades of the invention described above. Accordingly, turbine blade strength and rigidity are ensured, and thus, reliability is enhanced.

Finally, a manufacturing method of gas turbine blades according to the present invention, in the case of forming the cooling channels in the gas turbine blade of any one of the first to third aspects described above, includes a base-side elongated hole forming step of forming the base-side elongated holes from a base side of the turbine blade by electro-machining, a communicating hollow portion forming step of forming the communicating hollow portions by decreasing or halting the machining speed of the electro-machining at terminal end positions of the base-side elongated holes, and a tip-side elongated hole forming step of forming the tip-side elongated holes from tip side of the turbine blade to make the tip-side elongated holes penetrate into the communicating hollow portions.

With this manufacturing method, by lowering the machining speed of or halting the electro-machining at the terminal end positions of the base-side elongated holes, it is possible to easily form the communicating hollow portions having larger cross-sectional areas than the channel cross-sectional areas of the base-side elongated holes, thus consequently making it possible to simplify the formation of the cooling channels as a whole.

### {Advantageous Effects of Invention}

As described above, the gas turbine blades and the manufacturing method therefor according to the present invention are capable of simplifying the formation of cooling channels provided inside the turbine blades while simultaneously being capable of avoiding a loss of turbine blade strength and rigidity due to the formation of the cooling channels, thereby increasing reliability of the turbine blades and, consequently, the gas turbine as a whole.

### {Brief Description of Drawings}

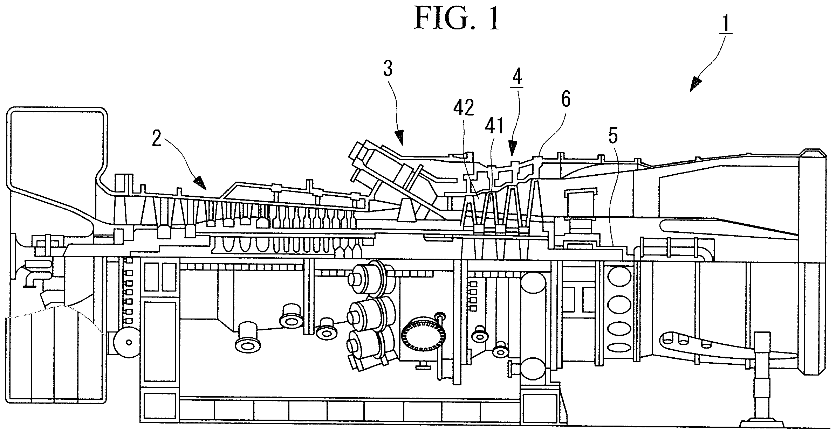

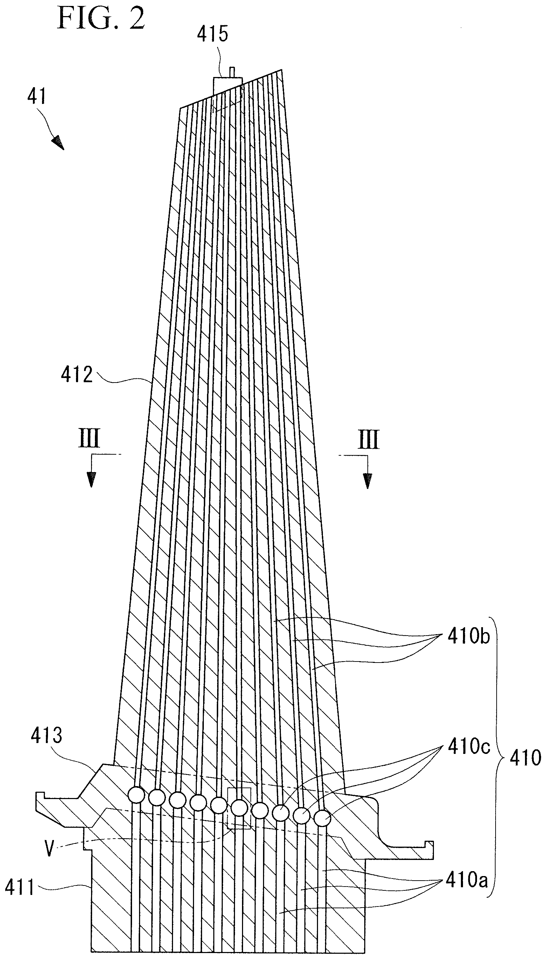

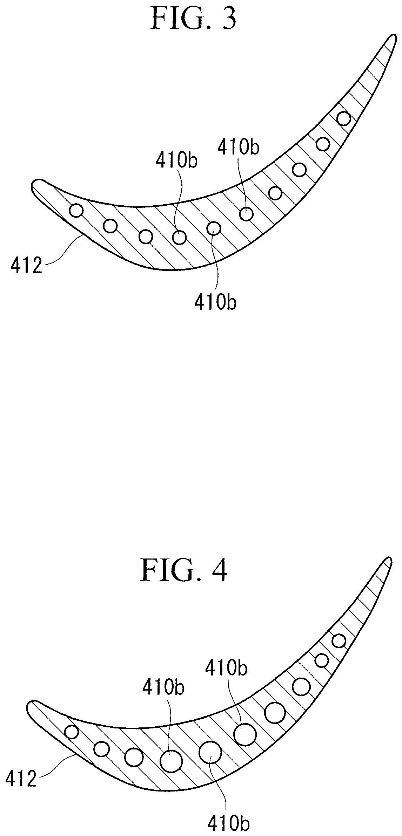

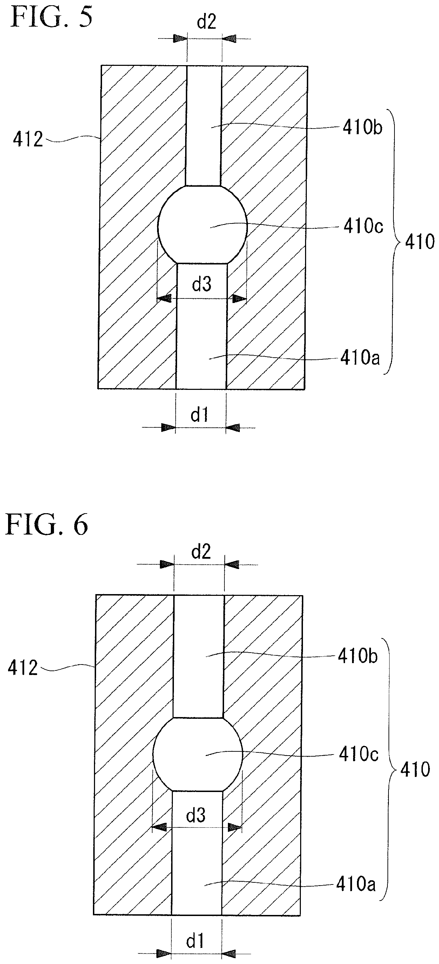

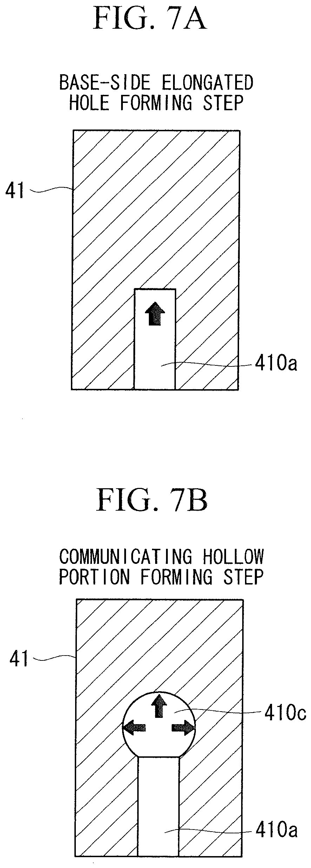

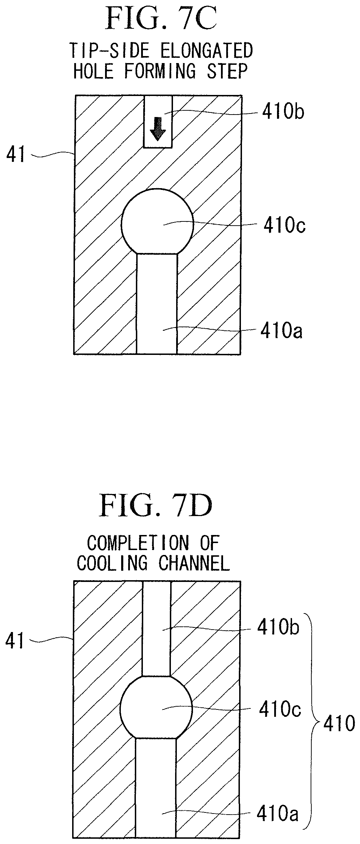

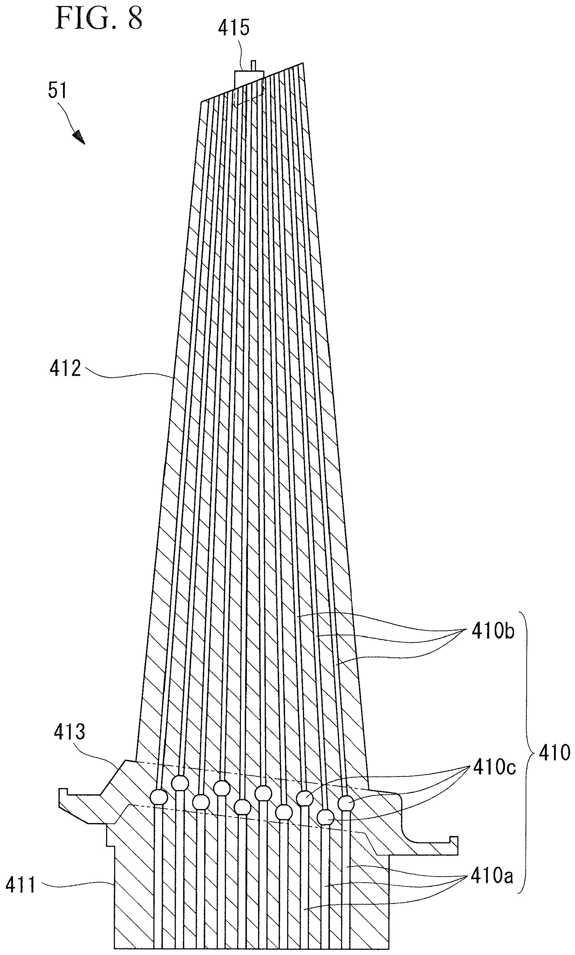

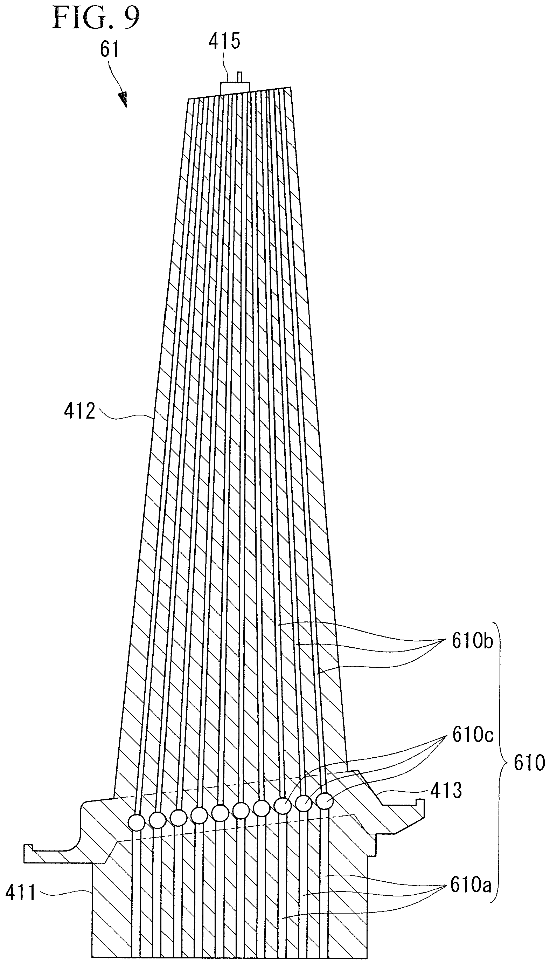

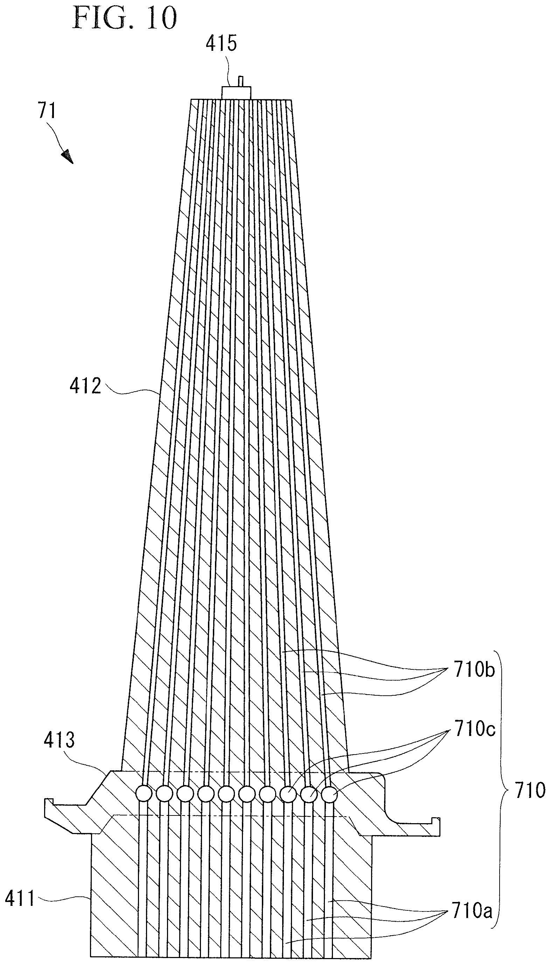

{Fig. 1} Fig. 1 is an overall configuration diagram showing an example of a gas turbine to which turbine blades according to embodiments of the present invention are applied.
{Fig. 2} Fig. 2 is a longitudinal cross-sectional view of the turbine blades showing a first embodiment of the present invention.
{Fig. 3} Fig. 3 is a lateral cross-sectional view of the turbine blades taken along the line III-III in Fig. 2.
{Fig. 4} Fig. 4 is a lateral cross-sectional view of the blade portions showing an example in which inner diameters of tip-side elongated holes are altered in accordance with the plate thickness of the blade portions.
{Fig. 5} Fig. 5 is a longitudinal cross-sectional view showing the vicinity of communicating hollow portions of cooling channels, where the portion V in Fig. 2 is enlarged.
{Fig. 6} Fig. 6 is a longitudinal cross-sectional view of the vicinity of communicating hollow portions of cooling channels, showing an example in which inner diameters of base-side elongated holes and the tip-side elongated holes are made identical.
{Fig. 7A} Fig. 7A is a longitudinal cross-sectional view showing a base-side elongated hole forming step in a manufacturing procedure of the turbine blades.
{Fig. 7B} Fig. 7B is a longitudinal cross-sectional view showing a communicating hollow portion forming step in the manufacturing procedure of the turbine blades.
{Fig. 7C} Fig. 7C is a longitudinal cross-sectional view showing a tip-side elongated hole forming step in the manufacturing procedure of the turbine blades.
{Fig. 7D} Fig. 7D is a longitudinal cross-sectional view showing a state in which cooling channels are completed in the manufacturing procedure of the turbine blades.
{Fig. 8} Fig. 8 is a longitudinal cross-sectional view of the turbine blades showing a second embodiment of the present invention.
{Fig. 9} Fig. 9 is a longitudinal cross-sectional view of the turbine blades showing a third embodiment of the present invention.
{Fig. 10} Fig. 10 is a longitudinal cross-sectional view of the turbine blades showing an unclaimed example serving to explain certain features of the present invention.

### {Description of Embodiments}

A plurality of embodiments of gas turbine blades according to the present invention and other examples will be described below with reference to the drawings.

### {First Embodiment}

Figs. 1 to 6 show a first embodiment of the present invention. Fig. 1 is an overall configuration diagram showing an example of a gas turbine to which turbine blades according to the present invention are applied. The gas turbine 1 is provided with a compressor 2, a combustor 3, and a turbine 4. The compressor 2 compresses the air taken in from an air-intake port to generate compressed air. The combustor 3 generates high-temperature, high-pressure combustion gas by spraying fuel into the compressed air. The turbine 4 generates a driving force by converting the thermal energy of the combustion gas into the rotational energy of a rotor 5. Then, the driving fore is transmitted to a generator (not shown) or the like connected to the rotor 5. The turbine 4 is disposed inside a turbine housing 6 which is provided so as to connect with the combustor 3.

The turbine 4 includes several stages of turbine blades 41 that are disposed in the rotor 5 so as to integrally rotate therewith, and several stages of turbine vanes 42 that are disposed alternately between the individual turbine blades 41 while being secured onto an inner circumferential surface of the turbine housing 6. Then, the high-temperature, high-pressure combustion gas generated at the combustor 3 passes through between these turbine blades 41 and turbine vanes 42 while expanding, thereby rotating the rotor 5 together with the turbine blades 41 to generate the driving force. In this turbine 4, part of the compressed air is extracted from the compressor 2 as cooling air, and members exposed to high-temperature gas, such as the turbine blades 41, the turbine vanes 42, and so forth, are, as described below, cooled from inside by the cooling air.

In the turbine blades 41, base portions 411, blade portions 412, and platform portions 413 are integrally formed with durable steel material being heat resistant and corrosion resistant; the base portions 411 are fitted to the rotor 5, the blade portions 412 extend in radial directions from the rotor 5, and tip portions of the individual blade portions 412 are circumferentially connected by a ring-shaped shroud 415. The platform portions 413 form a continuous cylindrical shape when individual turbine blades 41 are attached to the rotor 5, and thus, the flow of the combustion gas is rectified.

A plurality of multi-hole cooling channels 410 are formed inside the turbine blades 41, and the compressed air extracted from the compressor 2 is supplied to these cooling channels 410 as the cooling air via flow paths (not shown) provided inside the rotor 5. The cooling air is supplied from bottom portions of the base portions of the turbine blades 41, cools the inside of the turbine blades 41 in the process of flowing in the cooling channels 410 toward the tip portions thereof, and thus, the blade portions 412 are protected from the heat due to the high-temperature combustion gas.

The cooling channels 410 are configured having a plurality of straight channel-like base-side elongated holes 410a that are formed so as to extend in the longitudinal direction at the base side of the turbine blades 41, a plurality of tip-side elongated holes 410b that are similarly formed in straight-channel-like forms so as to extend in the longitudinal direction at the tip side of the turbine blades 41, and a plurality of communicating hollow portions 410c that are interposed at connecting portions between the base-side elongated holes 410a and the tip-side elongated holes 410b to individually allow the two types of elongated holes 410a and 410b to communicate with each other.

As shown in Fig. 3, the tip-side elongated holes 410b are disposed at nearly equal intervals along curved shapes of the blade portions 412. As shown in Fig. 4, inner diameters of the tip-side elongated holes 410b may be altered in accordance with the plate thickness of the blade portions 412. Here, the inner diameters of the tip-side elongated holes 410b that pass through portions where the plate thickness of the blade portions 412 is large are made larger than the inner diameters of the tip-side elongated holes 410b that pass through portions where the plate thickness is small.

As shown in an enlarged view in Fig. 5, the channel cross-sectional areas (inner diameters d1) of the base-side elongated holes 410a are larger than the channel cross-sectional areas (inner diameters d2) of the tip-side elongated holes 410b. Note that, as shown in Fig. 6, the inner diameters d1 of the base-side elongated holes 410a and the inner diameters d2 of the tip-side elongated holes 410b may be of the same size. As shown in Fig. 4, when altering the inner diameters of the tip-side elongated holes 410b in accordance with the plate thickness of the blade portions 412, the inner diameters of the base-side elongated holes 410a may be similarly altered.

The communicating hollow portions 410c are formed in spherical shapes, spheroid shapes, or the like, having larger lateral cross-sectional areas than the channel cross-sectional areas of the base-side elongated holes 410a and the tip-side elongated holes 410b. The communicating hollow portions 410c are formed so as to match the positions (height) of the platform portions 413 whose plate thickness is larger than the base portions 411 and the blade portions 412.

Next, a method of forming the cooling channels 410 in the turbine blades 41 configured as above will be described with reference to Figs. 7A to 7D.

First, in a base-side elongated hole forming step shown in Fig. 7A, the base-side elongated holes 410a are formed from the base side of the turbine blades 41, that is, the base portions 411 side thereof, by electro-machining, for example, electrical discharge machining, electrochemical machining (preferably nitric-acid electrochemical machining), or the like.

Next, in a communicating hollow portion forming step shown in Fig. 7B, the machining speed of the electro-machining is lowered or halted to be temporarily maintained at terminal end positions of the base-side elongated holes 410a, that is, the vicinity of the height where the platform portions 413 are formed. Accordingly, the inner diameters of the base-side elongated holes 410a at the terminal end portions are expanded, thereby forming spherically shaped or spheroid shaped communicating hollow portions 410c inside the platform portions 413. Here, machining of the turbine blades 41 from the base side thereof is completed. Note that, the terminal end positions of the base-side elongated holes 410a are not limited to the platform portions 413 and may be provided at the base portions 411.

Next, in a tip-side elongated hole forming step shown in Fig. 7C, the tip-side elongated holes 410b are formed from the tip side of the turbine blades 41 by electro-machining, for example, the electrical discharge machining or the electrochemical machining, or by milling with a drill or the like, and the machining is completed by having the tip-side elongated holes 410b penetrate into the communicating hollow portions 410c.

As shown in Fig. 7D, the base-side elongated holes 410a, the tip-side elongated holes 410b, and the communicating hollow portions 410c are made to communicate with each other in this way, thus completing the cooling channels 410.

In this way, by employing the machining method in which the machining speed of the electro-machining is lowered or halted at the terminal end positions of the base-side elongated holes 410a, the communicating hollow portions 410c having larger cross-sectional areas than the channel cross-sectional areas of the base-side elongated holes 410a can easily be formed, the ease of penetration by the tip-side elongated holes 410b that lead thereto is enhanced, thus consequently making it possible to simplify formation of the cooling channels 410 as a whole.

In the turbine blades 41 configured as above, the cooling channels 410 are configured having the plurality of the base-side elongated holes 410a that extend in the longitudinal direction at the base side of the turbine blades 41, the plurality of the tip-side elongated holes 410b that extend in the longitudinal direction at the tip side of the turbine blades 41, and the communicating hollow portions 410c that are positioned at the connecting portions of the individual elongated holes 410a and 410b; and the cross-sectional areas (inner diameters d3) of the communicating hollow portions 410c are larger than the channel cross-sectional areas (inner diameters d1 and d2) of the individual elongated holes 410a and 410b; therefore, even if the positions of the tip-side elongated holes 410b are slightly shifted in the tip-side elongated hole forming step shown in Fig. 7C, the level of penetration into the communicating hollow portions 410c is much improved, thus making it possible to simplify formation of the cooling channels 410.

In addition, because the base-side elongated holes 410a are formed in the plurality of straight-channel-like forms instead of a single hollow portion, sufficient effective cross-sectional areas are ensured at these portions of the turbine blades 41, and there is no loss of strength and rigidity of the turbine blades 41. Moreover, because the communicating hollow portions 410c where the lateral cross-sectional areas is the largest in the cooling channels 410 are formed inside the platform portions 413 where the plate thickness is the largest in the turbine blades 41, the portions where the effective cross-sectional areas of the turbine blades 41 become small in practice are minimized, thereby making it possible to reliably reduce the reduction in strength and rigidity of the turbine blades 41.

Note that, although machining is started from the base side toward the tip side in the elongated hole forming steps show in Figs. 7A to 7C, in contrast, machining may be started from the tip side toward the base side.

Finally, by applying the turbine blades 41 whose strength and rigidity are ensured in this way to the turbine 4, it is possible to considerably enhance the reliability of the gas turbine 1.

### {Second Embodiment}

Next, a second embodiment of the present invention will be described with reference to Fig. 8. Except for the point that the positions in the longitudinal direction differ for the plurality of the communicating hollow portions 410c that constitute the cooling channels 410, turbine blades 51 illustrated in this second embodiment are similar to the turbine blades 41 of the first embodiment shown in Fig. 2.

Here, the communicating hollow portions 410c are disposed, for example, in a staggered manner by varying the heights thereof in the vertical direction, so that the heights of the communicating hollow portions 410c that are adjacent to each other among the plurality of the communicating hollow portions 410c differ. Even if the heights are altered in this way, it is desirable that all of the communicating hollow portions 410c be formed so as to be positioned inside the platform portions 413.

With this configuration, the communicating hollow portions 410c that are adjacent to each other are not arranged at the same height, and distances between the individual communicating hollow portions 410c are increased; therefore, a reduction of the effective cross-sectional areas of the turbine blades 51 at the positions of the communicating hollow portions 410c is avoided, thereby more effectively preventing the loss of strength and rigidity of the turbine blades 51.

### {Third Embodiment}

Next, a third embodiment of the present invention will be described with reference to Fig. 9. Except for the point that lengths from tip ends of a plurality of tip-side elongated holes 610b to the communicating hollow portions are set to be the same, turbine blades 61 illustrated in this third embodiment are similar to the turbine blades 41 of the first embodiment shown in Fig. 2.

By setting the lengths of the plurality of the tip-side elongated holes 610b to be the same, simultaneous machining with a plurality of electrodes or drills is possible, variance in the accuracy of machining of the elongated holes does not occur, and the accuracy of machining is much improved.

### {Example}

Next, an example of turbine blades serving to explain certain features of the present invention will be described with reference to Fig. 10. Except for the point that lengths from tip ends of a plurality of tip-side elongated holes 710b to the communicating hollow portions are set to be the same, and furthermore lengths from end faces of base portions 411 of a plurality of base-side elongated holes 710a to the communicating hollow portions are also set to be the same, turbine blades 71 illustrated in this example are similar to the turbine blades 41 of the first embodiment shown in Fig. 2.

By setting the lengths of the tip-side elongated holes 710b and the lengths of the base-side elongated holes 710a respectively to be the same, similar effects to those of the turbine blade 61 in the example can be obtained.

### {Reference Signs List}

- 1: gas turbine
- 2: compressor
- 3: combustor
- 4: turbine
- 5: rotor
- 6: turbine housing
- 41: turbine blade
- 51: turbine blade
- 61: turbine blade
- 71: turbine blade
- 410: cooling channel
- 410a: base-side elongated hole
- 410b: tip-side elongated hole
- 410c: communicating hollow portion
- 411: base portion
- 412: blade portion
- 413: platform portion
- 415: shroud

## Claims

1. A gas turbine blade (41;51;61) in which cooling channels (410;610) are formed inside the turbine blade (41;51;61), and the turbine blade (41;51;61) is arranged to be cooled by causing cooling air to circulate through the cooling channels (410;610), wherein the cooling channels (410;610) comprise:
a plurality of straight channel-like base-side elongated holes (410a;610a) that extend in a longitudinal direction at a base side of the turbine blade (41;51;61),
a plurality of straight channel-like tip-side elongated holes (410b;610b) that extend in a longitudinal direction at a tip side of the turbine blade (41;51;61), and
a plurality of communicating hollow portions (410c;610c) that are interposed at connection portions between the base-side elongated holes (410a;610a) and the tip-side elongated holes (410b;610b) to individually allow one of the base-side elongated holes (410a;610a) to communicate with one of the tip-side elongated holes (410b;610b) via one of the communicating hollow portions (410c;610c) in a one-to-one relation,
wherein the communicating hollow portions (410c;610c) have larger cross-sectional areas than the channel cross-sectional areas of the two types of elongated holes,
wherein the communicating hollow portions (410c;610c) are formed so as to match the position of a platform portion (413) of the turbine blade (41;51;61), **characterised in that** the communicating hollow portions (410c; 610c) that are adjacent to each other are set at different heights along the longitudinal direction.

2. A gas turbine blade (61) according to Claim 1, wherein at least lengths from tip ends of the plurality of the tip-side elongated holes (610b) to the communicating hollow portions (610c) are set to be the same.

3. A gas turbine blade (41;51) according to Claim 1, wherein at least lengths from tip ends of the plurality of the tip-side elongated holes (410b) to the communicating hollow portions (410c) are set to be of different length.

4. A gas turbine employing the gas turbine blade (41;51;61) according to any one of Claims 1 to 3 in a turbine.

5. A manufacturing method of a gas turbine blade (41;51;61), in the case of forming the cooling channels (410;610) in the gas turbine blade (41;51;61) according to any one of Claims 1 to 3, comprising:
a base-side elongated hole forming step of forming the base-side elongated holes (410a;610a) from a base side of the turbine blade by electro-machining,
a communicating hollow portion forming step of forming the communicating hollow portions (410c;610c) by decreasing or halting the machining speed of the electro-machining at terminal end positions of the base-side elongated holes (410a;610a), and
a tip-side elongated hole forming step of forming the tip-side elongated holes (410b;610b) from the tip side of the turbine blade (41;51;61) to make the tip-side elongated holes (410b;610b) penetrate into the communicating hollow portions (410c;610c),
wherein the base-side elongated holes (410a;610a), the tip-side elongated holes (410b;610b) and the communicating hollow portions (410c;610c) are formed so that the communicating hollow portions (410c;610c) are interposed at connection portions between the base-side elongated holes (410a;610a) and the tip-side elongated holes (410b;610b) to individually allow one of the base-side elongated holes (410a;610a) to communicate with one of the tip-side elongated holes (410b;610b) via one communicating hollow portion (410c;610c) in a one-to-one relation.

## Patentansprüche

1. Eine Gasturbinenschaufel (41;51;61), in der Kühlungskanäle (410;610) im Inneren der Turbinenschaufel (41;51;61) ausgebildet sind, und die Turbinenschaufel (41;51;61) angeordnet ist, um gekühlt zu werden, indem Kühlluft durch die Kühlungskanäle (410;610) zirkulieren gelassen wird, wobei die Kühlungskanäle (410;610) aufweisen:
eine Vielzahl von geraden kanalartigen basisseitigen länglichen Löchern (410a;610a), die sich in einer Längsrichtung an einer Basisseite der Turbinenschaufel (41;51;61) erstrecken,
eine Vielzahl von geraden kanalartigen außenendseitigen länglichen Löchern (410b;610b), die sich in einer Längsrichtung an einer Außenendseite der Turbinenschaufel (41;51;61) erstrecken, und
eine Vielzahl von Verbindungs-Hohlabschnitten (410c;610c), die an Verbindungsabschnitten zwischen den basisseitigen länglichen Löchern (410a;610a) und den außenendseitigen länglichen Löchern (410b;610b) eingefügt sind, um einzeln eines der basisseitigen länglichen Löcher (410a;610a) über einen der Verbindungs-Hohlabschnitte (410c;610c) mit einem der außenendseitigen länglichen Löcher (410b;610b) in einer eins-zu-eins-Beziehung kommunizieren zu lassen,
wobei die Verbindungs-Hohlabschnitte (410c;610c) größere Querschnittflächen haben als die Kanal-Querschnittflächen der zwei Arten von länglichen Löchern,
wobei die Verbindungs-Hohlabschnitte (410c;610c) so ausgebildet sind, dass sie mit der Position eines Plattformabschnitts (413) der Turbinenschaufel (41;51;61) übereinstimmen,
**dadurch gekennzeichnet, dass**
die Verbindungs-Hohlabschnitte (410c;610c), die einander benachbart sind, an unterschiedlichen Höhen entlang der Längsrichtung angeordnet sind.

2. Eine Gasturbinenschaufel (61) gemäß Anspruch 1, wobei zumindest Längen von Außenenden der Vielzahl der außenseitigen länglichen Löcher (610b) zu den Verbindungs-Hohlabschnitten (610c) so eingestellt sind, dass sie gleich sind.

3. Eine Gasturbinenschaufel (41;51) gemäß Anspruch 1, wobei zumindest Längen von Außenenden der Vielzahl der außenseitigen länglichen Löcher (410b) zu den Verbindungs-Hohlabschnitten (410c) so eingestellt sind, dass sie eine unterschiedliche Länge besitzen.

4. Eine Gasturbine mit der Gasturbinenschaufel (41;51;61) gemäß einem der Ansprüche 1 bis 3 in einer Turbine.

5. Ein Herstellungsverfahren einer Gasturbinenschaufel (41;51;61), in Fall des Ausbildens der Kühlkanäle (410;610) in der Gasturbinenschaufel (41;51;61) gemäß einem der Ansprüche 1 bis 3, mit:
einem Ausbildungsschritt eines basisseitigen länglichen Lochs des Ausbildens der basisseitigen länglichen Löcher (410a;610a) von einer Basisseite der Turbinenschaufel durch elektrisches Abtragen,
einem Ausbildungsschritt eines Verbindungs-Hohlabschnitts des Ausbildens der Verbindungs-Hohlabschnitte (410c;610c) durch Verringern oder Stoppen der Bearbeitungsgeschwindigkeit des elektrischen Abtragens an Anschluß-Endpositionen der basisseitigen länglichen Löcher (410a;610a), und
einem Ausbildungsschritt eines außenendseitigen länglichen Lochs des Ausbildens der außenendseitigen länglichen Löcher (410b;610b) von der Außenendseite der Turbinenschaufel (41;51;61), um die außenendseitigen länglichen Löcher (410b;610b) in die Verbindungs-Hohlabschnitte (410c;610c) eintreten zu lassen,
wobei die basisseitigen länglichen Löcher (410a;610a), die außenendseitigen länglichen Löcher (410b;610b) und die Verbindungs-Hohlabschnitte (410c;610c) so ausgebildet werden, dass die Verbindungs-Hohlabschnitte (410c;610c) an Verbindungsabschnitten zwischen den basisseitigen länglichen Löchern (410a;610a) und den außenendseitigen länglichen Löchern (410b;610b) eingefügt sind, um einzeln eines der basisseitigen länglichen Löcher (410a;610a) über einen Verbindungs-Hohlabschnitt (410c;610c) mit einem der außenendseitigen länglichen Löcher (410b;610b) in einer eins-zu-eins-Beziehung kommunizieren zu lassen.

## Revendications

1. Aube (41; 51; 61) de turbine à gaz, dans laquelle des canaux (410; 610) de refroidissement sont formés à l'intérieur de l'aube (41; 51; 61) de turbine et l'aube (41; 51; 61) de turbine est agencée pour être refroidie en faisant circuler de l'air de refroidissement dans les canaux (410; 610) de refroidissement, les canaux (410; 610) de refroidissement comprenant :
une pluralité de trous (410a; 610a) oblongs du côté de la base analogues à des canaux rectilignes, qui s'étendent dans une direction longitudinale à un côté de la base de l'aube (41; 51; 61) de turbine,
une pluralité de trous (410b; 610b) oblongs du côté de la base analogues à des canaux rectilignes, qui s'étendent dans une direction longitudinale à un côté de la pointe de l'aube (41; 51; 61) de turbine et
une pluralité de parties (410c; 610c) creuses de communication, qui sont interposées à des parties de liaison entre les trous (410a; 610a) oblongs du côté de la base et les trous (410b; 610b) oblongs du côté de la pointe pour permettre, individuellement, à l'un des trous (410a; 610a) oblongs du côté de la base de communiquer avec l'un des trous (410b; 610b) oblongs du côté de la pointe par l'intermédiaire des parties (410c; 610c) creuses de communication dans une relation de un-à-un,
dans laquelle les parties (410c; 610c) creuses de communication ont des surfaces de section transversale plus grandes que les surfaces de section transversale de canaux des deux types de trous oblongs,
dans laquelle les parties (410c; 610c) creuses de communication sont formées de manière à correspondre à la position d'une partie (413) de plateforme de l'aube (41; 51; 61) de turbine,
**caractérisée en ce que** les parties (410c; 610c) creuses de communication, qui sont voisines les unes des autres, sont mises à des hauteurs différentes dans la direction longitudinale.

2. Aube (61) de turbine à gaz suivant la revendication 1, dans laquelle au moins des longueurs, allant d'extrémité de la pointe de la pluralité de trous (610b) oblongs du côté de la pointe aux parties (610c) creuses de communication, sont les mêmes.

3. Aube (41; 51) de turbine à gaz suivant la revendication 1, dans laquelle au moins des longueurs, allant d'extrémité de la pointe de la pluralité de trous (410b) oblongs du côté de la pointe aux parties (410c) creuses de communication, sont différentes.

4. Turbine à gaz utilisant l'aube (41; 51; 61) de turbine à gaz suivant l'une quelconque des revendications 1 à 3 dans une turbine.

5. Procédé de fabrication d'une aube (41; 51; 61) de turbine à gaz dans le cas de formation des canaux (410; 610) de refroidissement dans l'aube (41; 51; 61) de turbine à gaz suivant l'une quelconque des revendications 1 à 3, comprenant :
un stade de formation de trous oblongs du côté de la base, dans lequel on forme des trous (410a; 610a) oblongs du côté de la base à partir d'un côté de base de l'aube de turbine par électro-usinage,
un stade de formation d'une partie creuse de communication, dans lequel on forme les parties (410c; 610c) creuses de communication en diminuant la vitesse de l'électro-usinage ou en l'arrêtant à des positions d'extrémité terminale des trous (410a; 610a) oblongs du côté de la base,
un stade de formation de trous oblongs du côté de la pointe, dans lequel on forme les trous (410b; 610b) oblongs du côté de la pointe à partir du côté de la pointe de l'aube (41; 51; 61) de turbine pour faire que les trous (410b; 610b) oblongs du côté de la pointe pénètrent dans les parties (410c; 610c) creuses de communication,
dans lequel on forme les trous (410a; 610a) oblongs du côté de la base, les trous (410b; 610b) du côté de la pointe et les parties (410c; 610c) creuses de communication, de manière à interposer les parties (410c; 610c) creuses de communication aux parties de liaison entres les trous (410a; 610a) oblongs du côté de la base et les trous (410b; 610b) du côté de la pointe, pour permettre individuellement à l'un des trous (410a; 610a) oblongs du côté de la base de communiquer avec l'un des trous (410b; 610b) oblongs du côté de la pointe par l'intermédiaire d'une partie (410c; 610c) creuse de communication dans une relation de un-à-un.
